(19) **Europäisches Patentamt**

**European Patent Office**

**Office européen des brevets**

(11) Publication number: **0 038 201**
**B1**

(12) **EUROPEAN PATENT SPECIFICATION**

(45) Date of publication of patent specification: **16.01.85**

(51) Int. Cl.[4]: **B 62 K 11/04**

(21) Application number: **81301609.4**

(22) Date of filing: **13.04.81**

(54) **Motorised two-wheeled vehicles with supercharger apparatus.**

(30) Priority: **15.04.80 JP 48589/80**
**17.04.80 JP 49578/80**

(43) Date of publication of application:
**21.10.81 Bulletin 81/42**

(45) Publication of the grant of the patent:
**16.01.85 Bulletin 85/03**

(84) Designated Contracting States:
**DE FR GB**

(56) References cited:
**EP-A-0 039 182**
**DE-C- 407 141**
**US-A-3 027 706**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Inoue, Kazuo**
**3-6-1, Takanodai Nerima-ku**
**Tokyo (JP)**
Inventor: **Matsuda, Minoru**
**B-606 Tsutsujigaoka Haimu 2-13-3, Shibazaki**
**Chofu-shi Tokyo (JP)**
Inventor: **Shinozaki, Takeshi**
**1043-178, Oaza Shimotomi**
**Tokorozawa-shi Saitama-ken (JP)**

(74) Representative: **MacFarlane, John Anthony Christopher et al**
**HASELTINE LAKE & CO. Hazlitt House 28, Southampton Buildings Chancery Lane London WC2A 1AT (GB)**

Courier Press, Leamington Spa, England.

## Description

This invention relates to motorised two-wheeled vehicles, such as motorcycles, provided with supercharger apparatus for their internal combustion engines.

It has previously been proposed that a motorised two-wheeled vehicle body frame supporting a front wheel and a rear wheel is provided at its middle portion with an internal combustion engine; and that this engine is provided with supercharger apparatus in the form of a turbo-supercharger comprising an exhaust side of the engine and an engine intake compressor on the intake side of the engine and driven by the turbine.

According to the present invention there is provided a motorised two-wheeled vehicle having a vehicle body frame supporting a front wheel and a rear wheel and provided at its middle portion with an internal combustion engine and supercharger apparatus comprising an exhaust turbine provided on an exhaust passage side of the engine and a compressor provided on an intake passage side of the engine and arranged to be driven by the turbine, characterised in that the supercharger apparatus is positioned in a space defined by the engine and a support frame which supports the engine and is interposed between the engine and the front wheel; in that the support frame is composed of a first portion which is near the front of the engine and a second portion which is remote from the engine and is near the front of the supercharger apparatus and covers both side surfaces thereof; and in that said first portion and the engine are detachably connected to one another. By so positioning the supercharger apparatus in the vehicle it is located remote from the rider, and additionally in the present construction the supercharger apparatus is protected from external forces by a portion of the support frame not directly involved in supporting the engine.

For a better understanding of the invention and to show how the same may be carried into effect, reference will now be made, by way of example, to the accompanying drawings, in which:—

Figure 1 is a side view of part of a motorcycle;

Figure 2 is a front view of a support frame of the motorcycle of Figure 1; and

Figure 3 is a side view of the frame of Figure 2.

In the Figures, numeral 1 denotes a body frame of the motorcycle, numeral 2 denotes the front wheel, the motorcycle has a rear wheel (not shown), numeral 4 denotes an internal combustion engine provided in the middle portion of the frame 1, there is a fuel tank (not shown) above the engine, and (also not shown) there is a rider's seat to the rear of the fuel tank.

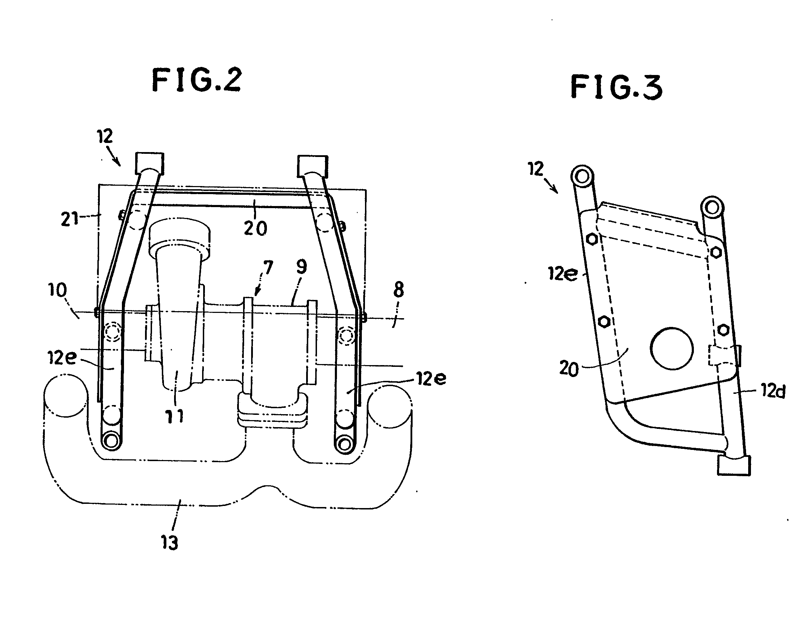

The engine 4 is provided with supercharger apparatus 7. The supercharger apparatus 7 is a turbosupercharger and comprises an exhaust driven turbine 9 (Figure 2) provided in an exhaust passage 8 of the engine 4, and a compressor 11 which is provided in an intake passage 10 of the engine 4 and which is driven by the turbine 9.

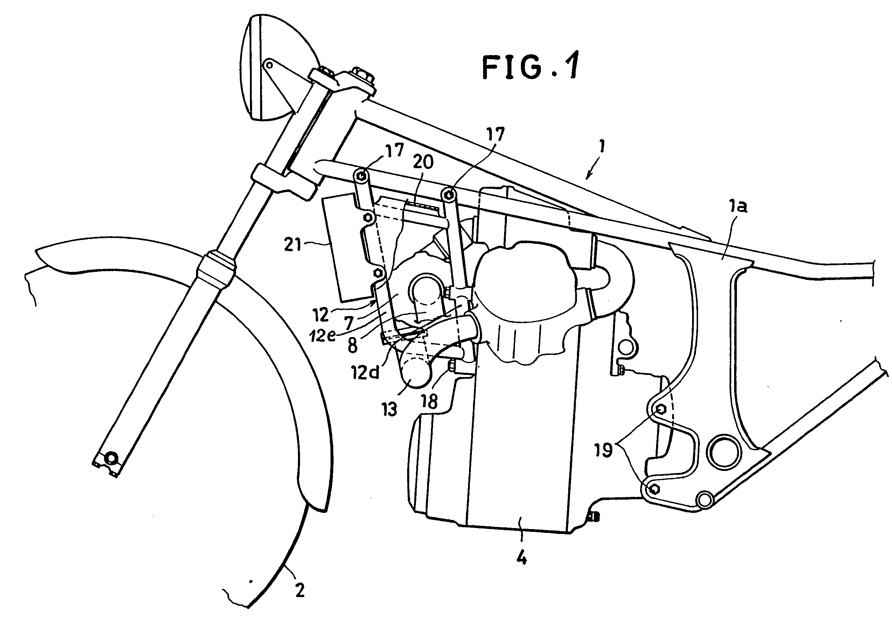

As shown clearly in Figure 1, the supercharger apparatus 7 is placed in a space defined by the engine 4 and a support frame 12 which serves to support the engine 4 and is interposed between the engine 4 and the front wheel 2 located in front of the engine 4. The support frame 12 comprises a pair of laterally spaced-apart frame portions, each of which is formed by an assembly of tubes 12d, 12e, so that the supercharger apparatus 7 is protected at each side. Each tube assembly consists of a first portion which is near the front of the engine and a second portion which is remote from the engine, is near the front of the supercharger, and covers both side surfaces thereof. Additionally, the support frame 12 is provided with a heat shield plate 20 covering the supercharger apparatus 7 from above to protect the rider from hot air. This plate 20 is of substantially inverted U-configuration with its central web bridging the frame portions and is fixed to the front and rear tubes 12e, 12d of each frame portion. Numeral 21 denotes a radiator provided in front of the support frame 12.

The supercharger apparatus 7 may be positioned lower than an exhaust port 13 of the engine 4, and a fuel supply system for the engine 4 can be an electronic control type in which an injection nozzle, a fuel supply means and an electronic control means are provided located to the rear of the engine 4.

Operation is as follows:—

If the engine 4 is operated, the supercharger apparatus 7 is operated thereby to give to the engine 4 a supercharging effect in a conventional manner. In the present construction, however, even if the front wheel 2 and/or the front fork supporting the front wheel should be damaged by external force acting from the front, the supercharger apparatus is protected from being damaged because it is guarded at its front by the support frame 12.

By positioning the supercharger apparatus 7 in the space defined by the engine 4 and the support frame 12 which supports the engine 4 the supercharger apparatus is situated at a forward position remore from the rider and also is guarded by the support frame from external force likely to cause damage. However, if the support frame 12 were to be connected fixedly to the vehicle body frame 1, for example by welding, attaching and detaching of the supercharger apparatus 7 would become troublesome. With this problem in mind, in the present construction the support frame 12 is constructed as a hanger that is detachably attached at its upper portion to the vehicle body frame 1, for example by bolts 17. Attaching and detaching of the supercharger apparatus 7 can be carried out easily after this support frame 12 has been detached from the vehicle body frame 1. The suppport frame 12 in this form is detachably attached at the lower end portion of each of the tube assembly first portions, for example by bolts 18, to the front portion of the engine 4, and the engine 4 is, in turn, connected at its rear portion, for example by bolts 19, to an attaching frame part 1a of the vehiclbe body frame 1, so that the engine 4 is prevented from dropping immediately the support frame 12 is detached.

**Claims**

1. A motorised two-wheeled vehicle having a vehicle body frame (1) supporting a front wheel (2) and a rear wheel and provided at its middle portion with an internal combustion engine (4) and supercharger apparatus (7) comprising an exhaust turbine (9) provided on an exhaust passage (8) side of the engine and a compressor (11) provided on an intake passage (10) side of the engine and arranged to be driven by the turbine; characterised in that the supercharger apparatus (7) is positioned in a space defined by the engine (4) and a support frame (12) which supports the engine and is interposed between the engine and the front wheel (2); in that the support frame (12) is composed of a first portion (12d) which is near the front of the engine (4) and a second portion (12e) which is remote from the engine (4) and is near the front of the supercharger apparatus (7) and covers both side surfaces thereof; and in that said first portion (12d) and the engine (4) are detachably connected to one another.

2. A vehicle as claimed in claim 1 wherein the support frame is a hanger which is detachably connected at its upper end portion to the vehicle body frame and which is detachably connected at its lower end portion to the front portion of the engine which is fixed at its rear portion to the vehicle body frame.

3. A vehicle as claimed in claim 2, wherein the support frame comprises a pair of laterally spaced-apart frame portions disposed one on each side of the supercharger apparatus; and wherein each of the frame portions comprises a plurality of members (12d, 12d) disposed to protect the supercharger apparatus from the side.

4. A vehicle as claimed in claim 2 or 3, wherein the support frame is provided with a heat shield plate (20) covering the supercharger apparatus from above.

**Revendications**

1. Véhicule motorisé à deux roues comportant un châssis principal (1) supportant une roue avant (2) et une roue arrière, pourvu à sa partie centrale d'un moteur à combustion interne (4) et d'un appareil surcompresseur (7) comprenant une turbine (9) placée dans un conduit d'échappement (8) du moteur et un compresseur (11) disposé dans un conduit d'admission du moteur et qui est conçu pour être entaîné par la turbine, caractérisé en ce que l'appareil surcompresseur (7) est placé dans un espace défini par le moteur (4) et par un châssis de support (12) qui supporte le moteur et est interposé entre ledit moteur et la roue avant (2), en ce que le châssis de support (12) se compose d'une première partie (12d) qui est proche de l'avant du moteur (4), et d'une seconde partie (12e) qui est plus éloignée du moteur (4) et est située près de l'avant de l'appareil surcompresseur (7) et couvre les deux surfaces latérales de celui-ci et en ce que ladite première partie (12d) et le moteur (4) sont reliés l'un à l'autre de façon détachable.

2. Véhicule selon la revendication 1, caractérisé en ce que le châssis de support est un organe de soutien dont l'extrémité supérieure est reliée de façon détachable au châssis principal du véhicule et dont l'extrémité inférieure est aussi reliée de façon détachable à la partie frontale du moteur, dont la partie arrière est fixée au châssis principal du véhicule.

3. Véhicule selon la revendication 2, caractérisé en ce que le châssis de support comprend deux parties espacées latéralement disposées de part et d'autre de l'appareil surcompresseur et en ce que chacune de ces parties du châssis comprend plusieurs éléments (12d, 12d) disposés de manière à protéger latéralement l'appareil surcompresseur.

4. Véhicule selon la revendication 2 ou 3, caractérisé en ce que le châssis de support est pourvu d'un écran thermique (20) constitué par une plaque couvrant le dessus de l'appareil surcompresseur.

**Patentansprüche**

1. Zweirädriges Motorfahrzeug mit einem ein Vorderrad (2) und ein Hinterrad abstützenden Fahrzeugrahmen (1), der in seinem Mittelteil eine Brennkraftmaschine (4) und ein Aufladegerät (7) aufweist, das eine an der Seite der Abgasleitung (8) der Brennkraftmaschine vorgesehene Abgasturbine (9) und einen an der Seite einer Ansaugleitung (10) der Brennkraftmaschine vorgesehenen und zum Antrieb durch die Turbine angeordneten Kompressor (11) aufweist, dadurch gekennzeichnet, daß das Auflagegerät in einem von der Brennkraftmaschine (4) und einem die Brennkraftmaschine abstützenden und zwischen der Brennkraftmaschine und dem Vorderrad (2) eingesetzten Stützrahmen (12) definierten Raum gelegen ist, daß der Stützrahmen (12) aus einem nahe dem vorderen Ende der Brennkraftmaschine (4) gelegenen ersten Teil (12d) und einem von der Brennkraftmaschine (4) entfernten und nahe dem vorderen Ende des Aufladegerätes (7) gelegenen zweiten Teil (12e) aufgebaut ist und beide Seitenflächen des Aufladegerätes bedeckt und daß der erwähnte erste Teil (12d) und die Brennkraftmaschine (4) lösbar miteinander verbunden sind.

2. Fahrzeug nach Anspruch 1, worin der Stützrahmen ein an seinem oberen Ende lösbar mit dem Fahrzeugrahmen und an seinem unteren Ende lösbar mit dem Vorderteil der Brennkraftmaschine verbundener Anhängeteil ist, wobei die Brennkraftmaschine an ihrem Hinterteil am Fahrzeugrahmen befestigt ist.

3. Fahrzeug nach Anspruch 2, worin der Stützrahmen ein Paar seitlichen Abstand voneinander besitzende Rahmenteile aufweist, von welchen je einer an jeder Seite des Aufladegerätes angeordnet ist, und worin jeder der Rahmenteile mehrere Glieder (12d, 12d) aufweist, die so angeordnet sind daß sie das Aufladegerät von der Seite her schützen.

4. Fahrzeug nach Anspruch 2 oder 3, worin der Stützrahmen mit einer Wärmeabschirmplatte (20) ausgestattet ist, die das Aufladegerät von oben her abdeckt.

FIG.1

# FIG.2

# FIG.3

0 038 201